# EUROPÄISCHE PATENTANMELDUNG

(11) **EP 4 803 279 A1**
(43) Veröffentlichungstag der Anmeldung: **09.09.2026**
(21) Anmeldenummer: 25161913.6
(22) Anmeldetag: 05.03.2025
(51) Int. Cl.: B27N 3/00, C08H 7/00, C08L 97/00, C09J 197/00

(54) **BINDEMITTEL ZUM HERSTELLEN VON HOLZWERKSTOFFEN**

(71) Anmelder: SWISS KRONO Tec AG, 6003 Luzern (CH)
(72) Erfinder: Kalwa, Norbert, 32805 Horn - Bad Meinberg (DE); Seidack, Georg, 16909 Wittstock / Dosse (DE)
(74) Vertreter: Kalkoff & Partner Patentanwälte mbB

(57) **Zusammenfassung**

Die Erfindung betrifft ein Bindemittel auf Ligninbasis zum Herstellen von Holzwerkstoffen. Um einen Bindemittel auf Ligninbasis bereitzustellen, das frei von Formaldehyd und Formaldehyd freisetzenden Substanzen ist, das ausreichend schnell zur Verwendung auf einer kontinuierlichen Heißpresse aushärtet, das frei von organischen Lösemitteln ist und ohne einen Zusatz weiterer Kunstharze oder Leime einsetzbar ist sowie gegenüber den bislang eingesetzten Bindemitteln eine verbesserte Ökobilanz aufweist, ist vorgesehen, dass das Bindemittel ein Reaktionsprodukt aus Lignin, einem wenigstens zwei Kohlenstoffatome aufweisenden Aldehyd sowie einem Kondensationshilfsmittel ist. Weiterhin weist das Bindemittel einen Härter zum Einstellen der Reaktivität des Reaktionsproduktes auf, wobei das Bindemittel frei von Formaldehyd ist.

## Beschreibung

Die Erfindung betrifft ein Bindemittel auf Ligninbasis zum Herstellen von Holzwerkstoffen, ein Verfahren zum Herstellen eines Bindemittels auf Ligninbasis, einen Holzwerkstoff hergestellt mit einem Bindemittel auf Ligninbasis sowie jeweils ein Verfahren zum Herstellen einer Spanplatte sowie einer Faserplatte mittels eines Bindemittels auf Ligninbasis.

Beim Herstellen von Cellulose aus Holz fällt in großen Mengen Lignin als Nebenprodukt an. Es wird geschätzt, dass jährlich weltweit bis zu 20 Milliarden Tonnen zur Verfügung stehen. Zudem ist Lignin in nahezu allen Regionen der Welt verfügbar, sodass der Einsatz auch im Hinblick auf Transportkosten unkritisch ist. Lignin wurde über Jahrzehnte überwiegend als Brennstoff für den energieintensiven Prozess der Zellstoffherstellung genutzt.

In den letzten Jahren wurde aber erkannt, dass Lignin ein wertvoller Rohstoff für die verschiedensten Anwendungen sein kann. Insbesondere handelt es sich bei Lignin um einen Stoff, der aus einem nachwachsenden Rohstoff gewonnen wird. Bei Verwendung von Lignin als Rohstoff statt von erdölbasierten Rohstoffen könnten viele Produkte ihre Ökobilanz deutlich verbessern.

Aufgrund der chemischen Struktur des Lignins aus einer Vielzahl von über Alkylbrücken miteinander verbundenen, aromatischen Ringen und somit einer chemischen Ähnlichkeit zu Phenolharzen erscheint eine Verwendung von Lignin als Rohstoff zur Bindemittelherstellung zunächst gut geeignet.

Einer breiteren Nutzung von Lignin steht aber dessen hohes Molgewicht entgegen, was unter anderem zu einer geringen Löslichkeit in Wasser führt und damit eine Verwendung in einer wässrigen Basis kompliziert macht. Zudem variiert das Molgewicht der Lignine je nach Herkunft und nach den Aufschlussbedingungen bei der Zellstoffherstellung. Unmodifiziertes Lignin ist bislang nur in einigen wenigen Anwendungen, beispielsweise in Viehfutter und als Füllstoff, möglich.

Jedoch existiert eine Vielzahl von Anwendungen, wo grundsätzlich ein Einsatz von Lignin möglich wäre, aber Lignin und selbst chemisch bereits umgewandeltes Lignin noch nicht die benötigten Eigenschaften besitzt, sodass nach wie vor anwendungstechnische Probleme existieren, die eine kommerzielle Verwertung unmöglich oder zumindest unwirtschaftlich machen. Dies gilt auch für den Einsatz von Lignin als Komponente eines Bindemittels für Holzwerkstoffe. Bereits heute wird Lignin vereinzelt in formaldeydhaltigem Bindemittel bei der Sperrholzherstellung eingesetzt. Es hat damit das zuvor eingesetzte Phenolharz teilweise substituiert, wobei jedoch häufig noch ein weiteres Kunstharz im Bindemittel enthalten ist. Allerdings ist die Aushärtungsgeschwindigkeit dieser ligninhaltigen Bindemittel relativ niedrig, weswegen auch ein Einsatz für andere Holzwerkstoffe, die heute üblicherweise auf kontinuierlichen Heißpressen hergestellt werden, nicht unwirtschaftlich ist.

Darüber hinaus ist heute die Verwendung von formaldehydhaltigen Bindemitteln problematisch, da die Grenzwerte für Formaldehyd von Werkstoffen zur Verwendung in Innenräumen oder in Fahrzeugen immer weiter gesenkt wurden. Dies gilt für Sperrholz, bei dem heute solche formaldehydhaltigen und einen Ligninanteil aufweisenden Bindemittel eingesetzt wird, nur eingeschränkt, da Sperrholz häufig für die Außenanwendung, beispielsweise als Betonschalung oder LKW-Aufbauten, bestimmt ist. Darüber hinaus werden solche, aus dem Stand der Technik bekannten Bindemittel mit einem Ligninanteil als Pulver eingesetzt. Der Einsatz von pulverförmigen Bindemitteln erfordert üblicherweise ein Umbau bzw. einen Einbau eines Pulverstreuers in eine Produktionslinie, insbesondere bei der Herstellung von Holzwerkstoffen, wie Spanplatten oder Faserplatten, bei denen bislang flüssige Bindemittel eingesetzt werden. Weiterhin werden ligninhaltige Bindemittel des Standes der Technik typischerweise unter Verwendung organischer Lösemittel hergestellt bzw. enthalten organische Lösemittel und kommen somit als Bindemittel für Holzwerkstoffe nicht in Frage. Die Produktionslinien in der Holzwerkstoff-Industrie sind aus Brandschutzgründen üblicherweise nicht für den Einsatz von Lösemitteln geeignet.

Der Erfindung liegt daher die technische Aufgabe zu Grunde, ein Bindemittel auf Ligninbasis bereitzustellen, das frei von Formaldehyd und Formaldehyd freisetzenden Substanzen ist, das ausreichend schnell zur Verwendung auf einer kontinuierlichen Heißpresse aushärtet, das frei von organischen Lösemitteln ist und ohne einen Zusatz weiterer Kunstharze oder Bindemittel einsetzbar ist sowie gegenüber den bislang eingesetzten Bindemitteln eine verbesserte Ökobilanz aufweist.

Die Aufgabe wird gelöst durch ein Bindemittel auf Ligninbasis gemäß Anspruch 1, durch einen Holzwerkstoff gemäß Anspruch 11, durch ein Verfahren zum Herstellen einer Spanplatte gemäß Anspruch 12, durch ein Verfahren zum Herstellen einer Faserplatte gemäß Anspruch 13 sowie durch ein Verfahren zum Herstellen eines Bindemittelsauf Ligninbasis gemäß Anspruch 14. Vorteilhafte Weiterbildungen der Erfindung sind in den abhängigen Ansprüchen wiedergegeben.

Das erfindungsgemäße Bindemittel auf Ligninbasis zum Herstellen von Holzwerkstoffen, insbesondere aus Holzzerkleinerungsprodukten, weist die nachfolgenden Komponenten auf und ist bevorzugt wenigstens zu 95 Gew.-% und besonders bevorzugt im Wesentlichen vollständig aus den folgenden Komponenten gebildet: Zunächst enthält das Bindemittel ein Reaktionsprodukt aus Lignin und insbesondere in einer wässrigen Lösung suspendiertem Lignin, einem wenigstens zwei Kohlenstoffatome aufweisendes Aldehyd sowie einem Kondensationshilfsmittel. Weiterhin weist das Bindemittel einen Härter zum Einstellen der Reaktivität des Reaktionsproduktes, insbesondere zum Zusetzen unmittelbar vor der Verwendung des Bindemittels, auf, wobei das Bindemittel frei von Formaldehyd, insbesondere frei von zugesetztem Formaldehyd, und/oder nicht formaldehydfreisetzend ist.

Der erfindungsgemäße Holzwerkstoff, insbesondere eine Holzwerkstoffplatte, eine Spanplatte oder eine Faserplatte, weist wenigstens ein Holzzerkleinerungsprodukt und insbesondere wenigstens ein Faser- und/oder Spanmaterial aus Holz und ein erfindungsgemäßes Bindemittel auf Ligninbasis als Bindemittel auf. Bevorzugt ist ausschließlich ein einziges erfindungsgemäßes Bindemittel auf Ligninbasis eingesetzt.

Das erfindungsgemäße Verfahren zum Herstellen einer Spanplatte weist als Verfahrensschritte zunächst ein Bereitstellen eines Spanmaterials, gefolgt von einem Beleimen des Spanmaterials mit einem erfindungsgemäßen Bindemittel auf Ligninbasis und insbesondere ausschließlich mit einem solchen erfindungsgemäßen Bindemittel auf Ligninbasis auf. Nachfolgend erfolgt dann ein ein- oder mehrschichtiges Aufstreuen des Spanmaterials zum Erzeugen eines Formstrangs, und schließlich ein Pressen und ein Erhitzen des Formstrangs zum Aushärten des Bindemittels und somit zum Erzeugen einer Spanplatte.

Das erfindungsgemäße Verfahren zum Herstellen einer Faserplatte, insbesondere einer hochdichten Faserplatte oder einer mitteldichten Faserplatte, weist als Verfahrensschritte zunächst ein Bereitstellen eines Fasermaterials, gefolgt von einem Beleimen des Fasermaterials mit einem erfindungsgemäßen Bindemittel auf Ligninbasis und insbesondere ausschließlich mit einem solchen erfindungsgemäßen Bindemittel auf Ligninbasis auf. Nachfolgend erfolgt dann eine Trocknung des beleimten Fasermaterials sowie ein ein- oder mehrschichtiges Aufstreuen des Fasermaterials zum Erzeugen eines Formstrangs, und schließlich ein Pressen und ein Erhitzen des Formstrangs zum Aushärten des Bindemittels und somit zum Erzeugen einer Faserplatte.

Das erfindungsgemäße Verfahren zum Herstellen eines Bindemittels auf Ligninbasis, insbesondere eines erfindungsgemäßen Bindemittels, weist als Verfahrensschritte zunächst eine Zugabe von Lignin und bevorzugt eines in einer wässrigen Lösung suspendierten Ligninpulvers, gefolgt von einer Zugabe und insbesondere einer langsamen Zugabe eines wenigstens zwei Kohlenstoffatome aufweisenden Aldehyds, insbesondere Glyoxal, auf. Nachfolgend schließt sich dann ein Erhitzen und Halten auf einer erhöhten Temperatur zum Kondensieren und zum Erhalten eines Reaktionsproduktes sowie dann ein Abkühlen des erhaltenen Gemisches an. Unmittelbar vor der Verwendung des Bindemittels bzw. der Applikation des Bindemittels auf ein zu verklebendes Werkstück oder Material erfolgt dann ein Zusetzen eines Härters zu dem Reaktionsprodukt.

Aus der erfindungsgemäßen Gestaltung des Bindemittels auf Ligninbasis ergeben sich eine ganze Reihe von Vorteilen. Zum einen ist der Rohstoff, das Lignin, in großen Mengen verfügbar und die Verwendung des natürlich vorkommenden sowie aus anderen Prozessen als Nebenprodukt ohnehin zur Verfügung stehenden Lignins führt zu einer verbesserten Ökobilanz gegenüber anderen, gegenwärtig im Stand der Technik eingesetzten Bindemittelsystemen. Darüber hinaus ist das erfindungsgemäße Bindemittel formaldehydfrei sowie auch frei von organischen Lösemitteln, sodass ein uneingeschränkter Einsatz, insbesondere für Holzwerkstoffe, möglich ist. Schließlich handelt es sich bei dem erfindungsgemäßen Bindemittel um ein qualitativ hochwertiges Bindemittel, dessen Aushärtungsgeschwindigkeit mittels des Härters ausreichend groß einstellbar ist, um einen Einsatz für auf einer kontinuierlichen Heißpresse hergestellte Holzwerkstoffe ohne Kapazitätsverluste der entsprechenden Produktionsanlagen zu ermöglichen.

Ein Bindemittel auf Ligninbasis, nachfolgend auch als Ligninbindemittel bezeichnet, ist eine Zusammensetzung und insbesondere ein Klebstoff bzw. ein Leim auf Wasserbasis, der als eine Hauptkomponente Lignin enthält und/oder auf Lignin basiert. Das erfindungsgemäße Bindemittel ist bevorzugt flüssig und/oder fließfähig und auf ein zu verklebendes Material, insbesondere Faser- und/oder Spanmaterial aus Holz, aufsprühbar. Dabei kann die flüssige Zusammensetzung auch ungelöste, feste Komponenten aufweisen, die dann aber bevorzugt mit einer kleinen Partikelgröße und/oder fein verteilt vorliegen. Das erfindungsgemäße Bindemittel ist bevorzugt jedoch zur flüssigen Applikation vorgesehen und nicht als Pulver oder anderer Feststoff und/oder nicht zum Beimischen oder Aufstreuen gebildet. Weiterhin liegt im Bindemittel bevorzugt im Wesentlichen kein Lignin oder Ligninpulver mehr vor bzw. es ist eine im Wesentlichen vollständige Reaktion des Lignins mit dem Aldehyd zum Reaktionsprodukt erfolgt.

Generell kann das erfindungsgemäße Bindemittel auf Ligninbasis als Einkomponenten-Bindemittel verstanden werden, insbesondere in dem gebrauchsfertigen Zustand mit wenigstens einem, dem Reaktionsprodukt zugegebenen Härter. Um eine Lagerbarkeit zu erreichen und ein frühzeitiges Härten zu vermeiden, wird der Härter jedoch erst kurz vor dem Gebrauch hinzugefügt, sodass das erfindungsgemäße Bindemittel auf Ligninbasis auch als Zweikomponenten-Bindemittel angesehen werden kann. Die zweite Komponente ist dabei bevorzugt aus dem oder den Härtern sowie, im Falle eines in wässriger Lösung eingesetzten Härters, auch aus dem entsprechenden Lösemittel gebildet. Besonders bevorzugt weist die zweite Komponente keine weiteren Substanzen oder höchstens 5 Gew.-% weitere Substanzen auf. Die erste Komponente ist bevorzugt dann entsprechend aus den übrigen Substanzen des erfindungsgemäßen Bindemittels auf Ligninbasis gebildet, insbesondere aus dem Lignin bzw. dem in wässriger Lösung suspendierten Ligninpulver und dem Aldehyd, wobei bevorzugt im erhaltenen Reaktionsprodukt kein Lignin und/oder kein Aldehyd mehr enthalten sind. Besonders bevorzugt weist die erste Komponente keine weiteren Substanzen oder höchstens 5 Gew.-% weitere Substanzen auf.

Der Härter ermöglicht ein ausreichend schnelles Aushärten, insbesondere zum Einsatz in einer schnellen kontinuierlichen Heißpresse. Der Härter kann daher auch als Beschleuniger bezeichnet werden. Vorzugsweise ist der Härter gut wasserlöslich und/oder vollständig in der Bindemittelzusammensetzung löslich, um eine gute Verteilung sowie eine ausreichende Reaktivität bereitzustellen. Generell enthält der Härter kein Formaldehyd und/oder setzt kein Formaldehyd beim Vernetzen bzw. Härten des Bindemittels frei. Das Aushärten des Bindemittels oder eines das Bindemittel aufweisenden Holzwerkstoffs erfolgt bevorzugt unter Druck und erhöhter Temperatur. Der Härter führt bevorzugt zu einer duroplastischen Aushärtung des Bindemittels.

Generell ist das erfindungsgemäße Bindemittel frei von Formaldehyd und/oder weist kein zugesetztes Formaldehyd auf. Unter einer von Formaldehyd-freien Zusammensetzung wird zunächst ein Stoffgemisch ohne Zusatz von Formaldehyd verstanden, wobei das Stoffgemisch auch im Rahmen der zu erwartenden chemischen Reaktionen kein Formaldehyd, insbesondere als Nebenprodukt, freisetzt. Dagegen sind in den eingesetzten Rohstoffen, insbesondere in dem Holz, natürlich vorkommende Mengen Formaldehyd als Bestandteil, insbesondere eines mittels des erfindungsgemäßen Bindemittels hergestellten Holzwerkstoffs, denkbar, wobei ein solcher Formaldehydgehalt dabei bevorzugt weniger als 1 Gew.-%, besonders bevorzugt weniger als 0,1 Gew.-% und ganz besonders bevorzugt weniger als 0,001 Gew.-% beträgt. Ebenfalls bevorzugt liegt ein Wert einer Formaldehydbestimmung, insbesondere der Formaldehydfreisetzung und/oder bestimmt mittels einer Gasanalysemethode, eines mittels des erfindungsgemäßen Bindemittels hergestellten Holzwerkstoffs unter 2,0 mg/h m², besonders bevorzugt unter 1,0 mg/h m², ganz besonders bevorzugt unter 0,5 mg/h m² und insbesondere bevorzugt unter 0,35 mg/h m².

Unter einem Holzwerkstoff im Sinne der Erfindung wird zunächst ein Werkstoff verstanden, dessen strukturgebendes Material Holz ist und/oder das durch Zerkleinern von Holz, also aus Holzzerkleinerungsprodukten, und anschließendes Zusammenfügen des Materials erzeugt wird. Das Zusammenfügen und/oder das Zusammenhalten der zusammengefügten Strukturelemente erfolgt dabei mittels wenigstens eines und bevorzugt genau eines Bindemittels.

Als Bindemittel wird dabei bevorzugt überwiegend und besonders bevorzugt ausschließlich ein erfindungsgemäßes Bindemittel auf Ligninbasis eingesetzt. Der Anteil des Ligninbindemittels am Bindemittel beträgt bevorzugt mindestens 60 Gew.-%, besonders bevorzugt mindestens 80 Gew.-%, ganz besonders bevorzugt mindestens 90 Gew.-% und insbesondere bevorzugt mindestens 99 Gew.-%. Entsprechend ist bevorzugt, dass das Bindemittel ausschließlich aus dem erfindungsgemäßen Bindemittel auf Ligninbasis gebildet ist. Darüber hinaus kann das Bindemittel auch zugesetztes Wasser enthalten, wobei die Menge des dem Ligninbindemittel zugesetzten Wassers bevorzugt zwischen 20 Gew.-% und 80 Gew-%, besonders bevorzugt zwischen 30 Gew.-% und 70 Gew-%, ganz besonders bevorzugt zwischen 40 Gew.-% und 60 Gew-% und insbesondere bevorzugt im Wesentlichen 50 Gew.-% beträgt. Der Anteil des Lignins am Bindemittel des Holzwerkstoffs beträgt bevorzugt mindestens 20 Gew.-%, besonders bevorzugt mindestens 30 Gew.-%, ganz besonders bevorzugt mindestens 40 Gew.-% und insbesondere bevorzugt mindestens 45 Gew.-%.

Ein aus einem Fasermaterial gebildeter Holzwerkstoff und insbesondere eine daraus gebildete Holzwerkstoffplatte ist generell eine Faserplatte und dabei bevorzugt eine hochdichte Faserplatte (HDF). Generell können aber auch mitteldichte Faserplatten (MDF) mittels des erfindungsgemäßen Bindemittels hergestellt werden. Weiterhin bevorzugt erfolgt das Herstellen einer Faserplatte mit dem erfindungsgemäßen Bindemittel im Trockenverfahren.

Erfindungsgemäß ist das Bindemittel zum Herstellen eines Holzwerkstoffs, insbesondere aus Holzzerkleinerungsprodukten, vorgesehen. Unter Holzzerkleinerungsprodukten werden dabei generell alle Materialien verstanden, die durch ein mechanisches Zerkleinern von Holz entstehen und können dabei Fasern, Späne, Grobspanmaterial, Strands oder dergleichen sein. Bevorzugt handelt es sich um Fasermaterial zum Herstellen einer Faserplatte, insbesondere nach DIN EN 622, und/oder um Späne zum Herstellen einer Spanplatte, insbesondere nach DIN EN 312.

Weiterhin erfindungsgemäß ist beim Verfahren zum Herstellen einer Spanplatte ein Beleimen des Spanmaterials mit wenigstens einem erfindungsgemäßen Bindemittel auf Ligninbasis und bevorzugt mit genau einem erfindungsgemäßen Bindemittel auf Ligninbasis vorgesehen. Weiterhin bevorzugt wird ausschließlich ein erfindungsgemäßes Bindemittel auf Ligninbasis als Bindemittel verwendet. Der Anteil des Bindemittels bezogen auf das Gewicht des Spanmaterials beträgt bevorzugt zwischen 4 Gew.-% und 15 Gew.-%, besonders bevorzugt zwischen 5 Gew.-% und 12 Gew.-% und ganz besonders bevorzugt zwischen 8 Gew.-% und 10 Gew.-%. Im Rahmen von Laborversuchen und -tests und insbesondere zum Herstellen kleinerer Laborspanplatten zu Versuchszwecken wird typischerweise ein höherer Bindemittelanteil eingesetzt, wobei es bekannt ist, den in Laborversuchen verwendeten Bindemittelanteil auf einen Wert für die tatsächliche Produktion herunter zu skalieren. Generell erfolgt das Herstellen der Spanplatte bevorzugt normgerecht, insbesondere nach DIN EN 312, und dabei besonders bevorzugt mit einem Bindemittelanteil innerhalb dieser Norm. Der Härteranteil bezogen auf das Gewicht des Bindemittels beträgt weiterhin bevorzugt zwischen 5 Gew.-% und 10 Gew.-%. Über die Menge des zugegebenen Härters kann u.a. die Topfzeit des Bindemittels eingestellt werden, sodass bei einer hohen erforderlichen Topfzeit eine verringerte Menge des Härters einzusetzen ist.

Aus dem beleimten Spanmaterial wird nachfolgend zum Herstellen einer Spanplatte ein Formstrang durch ein- oder mehrschichtiges Aufstreuen des Spanmaterials erzeugt, der dann nachfolgend durch Pressen und durch Erhitzen zu einer Holzwerkstoffplatte, insbesondere einer Spanplatte, geformt wird. Das Pressen erfolgt dabei bevorzugt in einer kontinuierlich betriebenen Presse bzw. einer Contipresse. Dem Pressen nachfolgend erfolgt bevorzugt ein Zuschnitt auf das gewünschte Plattenmaß. Der Pressdruck liegt bevorzugt zwischen 1,0 kg/cm² (98 kPa) und 2,5 kg/cm² (245 kPa), besonders bevorzugt zwischen 1,2 kg/cm² (118 kPa) und 2,0 kg/cm² (196 kPa) und ganz besonders bevorzugt zwischen 1,4 kg/cm² (137 kPa) und 1,9 kg/cm² (186 kPa). Weiterhin erfolgt das Pressen bevorzugt bei einer Temperatur zwischen 175 °C und 250 °C, besonders bevorzugt zwischen 190 °C und 230 °C, ganz besonders bevorzugt zwischen 200 °C und 220 °C und insbesondere bevorzugt bei 210 °C.

Die hergestellte Spanplatte kann dabei eine einschichtige Spanplatte sein oder aber mehr als eine Schicht aufweisen. Bei einer mehrschichtigen Spanplatte unterscheidet sich bevorzugt die Spangröße, die Bindemittelmenge und/oder die Streudichte der Späne in den unterschiedlichen Schichten. Besonders bevorzugt ist eine mehrschichtige Spanplatte wenigstens dreischichtig und weist ganz besonders bevorzugt dabei zwei außenliegende Deckschichten und wenigstens eine Mittelschicht auf.

Erfindungsgemäß ist beim Verfahren zum Herstellen einer Faserplatte ein Beleimen des Fasermaterials vorgesehen, was bevorzugt in einer Beleimstation erfolgt, die besonders bevorzugt eine Blowline-Beleimungsanlage aufweist. Obwohl das Beleimen in beliebiger Weise erfolgen kann, wird bevorzugt dem in Bewegung befindlichen Fasermaterial wenigstens ein erfindungsgemäßes Bindemittel auf Ligninbasis und bevorzugt genau ein erfindungsgemäßes Bindemittel auf Ligninbasis zugegeben. Weiterhin bevorzugt wird ausschließlich ein erfindungsgemäßes Bindemittel auf Ligninbasis als Bindemittel verwendet. Das Beleimen erfolgt bevorzugt durch Aufsprühen im Blowline-Verfahren, bei dem besonders bevorzugt das Bindemittel als Tropfen, mit einer homogenen Tropfenverteilung und/oder mit einer hohen Tropfengeschwindigkeit auf das Fasermaterial aufgesprüht wird. Vorzugsweise erfolgt zudem vor dem Trocknen und/oder bei der Zugabe des Bindemittels zudem eine Zugabe von zwischen 1 Gew.-% und 5 Gew.-%, besonders bevorzugt zwischen 1,5 Gew.-% und 3 Gew.-% und ganz besonders bevorzugt in etwa 2 Gew.-% Paraffin und insbesondere Heißparaffin.

Der Anteil des Bindemittels bezogen auf das atro-Gewicht (atro bedeutet dabei absolut trocken) des Fasermaterials beträgt bevorzugt zwischen 5 Gew.-% und 15 Gew.-%, besonders bevorzugt zwischen 12 Gew.-% und 18 Gew.-% und ganz besonders bevorzugt in etwa 15 Gew.-%. Im Rahmen von Laborversuchen und -tests und insbesondere zum Herstellen kleinerer Laborfaserplatten zu Versuchszwecken wird typischerweise ein höherer Bindemittelanteil eingesetzt, wobei es bekannt ist, den in Laborversuchen verwendeten Bindemittelanteil auf einen Wert für die tatsächliche Produktion herunter zu skalieren. Generell erfolgt das Herstellen der Faserplatte bevorzugt normgerecht, insbesondere nach DIN EN 622, und dabei besonders bevorzugt mit einem Bindemittelanteil innerhalb dieser Norm. Der Härteranteil bezogen auf die Masse des Bindemittels beträgt weiterhin bevorzugt zwischen 1 Gew.-% und 10 Gew.-%, besonders bevorzugt zwischen 2,5 Gew.-% und 7,5 Gew.-% und ganz besonders bevorzugt in etwa 5 Gew.-%.

Aus dem beleimten und getrockneten Fasermaterial wird nachfolgend ein Formstrang durch ein- oder mehrschichtiges Aufstreuen des Fasermaterials erzeugt, der dann nachfolgend durch Pressen und durch Erhitzen zu einer Holzwerkstoffplatte geformt wird. Besonders bevorzugt erfolgt ein kontinuierliches Heißpressen des beleimten und getrockneten Fasermaterials. Das Pressen erfolgt dabei bevorzugt über eine Presszeit zwischen 2 Minuten und 15 Minuten, besonders bevorzugt zwischen 4 Minuten und 10 Minuten und ganz besonders bevorzugt zwischen 5 Minuten und 9 Minuten. Weiterhin erfolgt das Pressen bevorzugt bei einer Temperatur zwischen 140 °C und 230 °C, besonders bevorzugt zwischen 160 °C und 210 °C und ganz besonders bevorzugt zwischen 170 °C und 200 °C. Ebenfalls bevorzugt erfolgt das Pressen bei einer unterschiedlichen Temperatur in einem ersten Abschnitt und insbesondere in einer ersten Hälfte der kontinuierlichen Heißpresse als in einem zweiten Abschnitt und insbesondere in einer zweiten Hälfte, wobei die Temperatur besonders bevorzugt im ersten Abschnitt höher ist als im zweiten Abschnitt und ganz besonders bevorzugt die Temperatur in der ersten Hälfte 200 °C und in der zweiten Hälfte 170 °C beträgt.

Beim erfindungsgemäßen Verfahren zum Herstellen eines Bindemittels auf Ligninbasis erfolgt das Erhitzen zum Kondensieren und zum Erhalten eines Reaktionsproduktes und/oder das Halten auf einer erhöhten Temperatur bevorzugt über eine Dauer von zwischen 0,5 Stunden und 5 Stunden, besonders bevorzugt zwischen 1 Stunde und 3 Stunden, ganz besonders bevorzugt zwischen 1,5 Stunden und 2,5 Stunden und insbesondere bevorzugt über 2 Stunden. Zusätzlich oder unabhängig davon beträgt die Temperatur beim Erhitzen und/oder beim Halten auf dieser Temperatur zwischen 70 °C und 110 °C, bevorzugt zwischen 75 °C und 100 °C, besonders bevorzugt zwischen 80 °C und 95 °C, ganz besonders bevorzugt zwischen 85 °C und 95 °C und insbesondere bevorzugt 90 °C. Das Reaktionsprodukt ist bevorzugt, insbesondere bei der Zugabe des wenigstens einen Härters, flüssig und besonders bevorzugt eine homogene Flüssigkeit.

Eine Gestaltung des erfindungsgemäßen Bindemittels ist bevorzugt, bei dem das Aldehyd wenigstens ein bifunktionelles Aldehyd und bevorzugt genau ein einziges bifunktionelles Aldehyd ist. Der Aldehyd weist bevorzugt wenigstens zwei Aldehydgruppen, insbesondere genau zwei Aldehydgruppen auf und ist dann entsprechend ein Dialdehyd. Generell ist also denkbar, dass der Aldehyd mehr als zwei Aldehyd-Gruppen aufweist, wobei ein Dialdehyd bevorzugt ist. Erfindungsgemäß weist der Aldehyd mindestens zwei Kohlenstoffatome auf, wobei davon bevorzugt Acetaldehyd ausgenommen ist und/oder der Aldehyd bevorzugt kein Acetaldehyd ist.

Als Aldehyd werden aliphatische Aldehyde und insbesondere aliphatische Dialdehyde bevorzugt. Neben wenigstens zwei Aldehyd-Gruppen kann das Aldehyd grundsätzlich noch weitere funktionelle Gruppen aufweisen. Bevorzugt sind die Aldehydgruppen jedoch die einzigen funktionellen Gruppen und insbesondere bevorzugt ist der Rest des Aldehyds aus reinen Kohlenwasserstoff-Gruppen, insbesondere aliphatischen Kohlenwasserstoff-Gruppen, gebildet. Obwohl dieser oder diese Kohlenwasserstoff-Reste bzw. das entsprechende Kohlenwasserstoff-Gerüst des Moleküls beliebig gebildet und dabei geradlinig, unverzweigt, verzweigt, zyklisch oder sogar heterozyklisch gebildet sein kann, ist es bevorzugt, dass der Aldehyd neben den beiden Aldehyd-Gruppen lediglich ein unverzweigtes Kohlenwasserstoff-Gerüst aufweist.

Insbesondere ist bevorzugt, dass das wenigstens eine Aldehyd Glyoxal umfasst und bevorzugt ausschließlich Glyoxal ist. Bei Glyoxal handelt es sich um Ethandial, das einfachste mögliche Dialdehyd, das korrekt als Oxalaldehyd bezeichnet wird. Generell ist es jedoch bevorzugt, dass die beiden Aldehydgruppen am als Dialdehyd oder Mehrfachaldehyd gebildeten Aldehyd endständig am Molekül und insbesondere an einer Kohlenwasserstoffkette angeordnet sind.

Eine bevorzugte Weiterbildung des erfindungsgemäßen Bindemittels sieht vor, dass das Aldehyd zusätzlich oder alternativ zu einem Mehrfachaldehyd, zu einem Dialdehyd und insbesondere zu Glyoxal ein Monoaldehyd mit mindestens drei Kohlenstoffatomen und insbesondere dabei Propanal eingesetzt wird. Der Monoaldehyd weist dabei bevorzugt eine unverzweigte und/oder reine Kohlenwasserstoffkette auf. Die Anzahl der Kohlenstoffe beträgt dabei generell mindestens 3, bevorzugt zwischen 3 und 10, besonders bevorzugt zwischen 3 und 8, ganz besonders bevorzugt zwischen 3 und 6 und insbesondere bevorzugt genau 3. Entsprechend handelt es sich insbesondere bevorzugt um Propanal, das auch als Propionaldehyd bezeichnet wird.

Hinsichtlich des verwendeten Härters besteht die Anforderung, dass die Aushärtungsgeschwindigkeit ausreichend groß ist, um einen Einsatz für auf einer kontinuierlichen Heißpresse hergestellte Holzwerkstoffe zu ermöglichen. Eine bevorzugte Ausgestaltung des erfindungsgemäßen Bindemittels sieht daher vor, dass der Härter wenigstens zwei und bevorzugt genau zwei Hydroxygruppen aufweist und/oder bevorzugt ein Phenol aufweist und ganz besonders bevorzugt Resorcin ist. Ebenso bevorzugt weist der Härter bevorzugt als funktionelle Gruppen ausschließlich Hydroxygruppen auf.

Bevorzugt weist der Härter ein aromatisches Grundgerüst und besonders bevorzugt einen einzigen, aromatischen Sechsring auf. Entsprechend ist der Härter bevorzugt ein Benzolderivat bzw. aufgrund von zwei vorhandenen Hydroxygruppen besonders bevorzugt ein Dihydroxybenzol. Entsprechend weist der Härter bevorzugt Resorcin auf und ist besonders bevorzugt Resorcin, also 1,3 Dihdroxybenzol bzw. 1,3 Benzoldiol. Die Verwendung von Resorcin ist hier besonders vorteilhaft, da die beiden Hydroxygruppen jeweils zu einer Aktivierung in der ortho- und para-Position führen und somit bei Resorcin zwei doppelt aktivierte Positionen vorliegen, was zu einer besonders hohen Reaktivität führt. Gewöhnlich führt ein Einsatz von Resorcin zur unkontrollierten Beschleunigung der Härtung und kann daher nicht oder nur als Zusatz in einer geringen Menge neben wenigstens einem anderen Härter eingesetzt werden. Überraschend hat sich jedoch gezeigt, dass für das erfindungsgemäße Bindemittel Resorcin ein geeigneter Härter ist. In vorteilhafter Weise kann bei dem erfindungsgemäßen Ligninbindemittel Resorcin als Härter eine mit anderen Bindemitteln und anderen Härtern, z.B. auf Phenolharzbasis, vergleichbare Gelierzeiten erreicht werden. Anders als beim Einsatz von Resorcin bei anderen Bindemitteln, wie z.B. Phenolharz, führt das Resorcin bei dem erfindungsgemäßen Ligninbindemittel nicht zu unkontrollierten Beschleunigungen der Bindemittel, die sich negativ auf die Standzeiten und die Verarbeitbarkeit in der Produktion auswirken. Ein weiterer Vorteil von Resorcin liegt in der hohen Wasserlöslichkeit von etwa 1400g pro Liter Wasser bei 20°C, sodass dieser Härter gut für die wässrigen Systeme der Holzwerkstoff-Industrie geeignet ist.

Bei einer vorteilhaften Ausgestaltung des erfindungsgemäßen Bindemittels weist der Härter wenigstens ein Silan auf und ist bevorzugt wenigstens ein Silan und besonders bevorzugt genau ein Silan. Bevorzugt weist das Silan ein Silicium-Grundgerüst und neben Wasserstoff noch funktionelle Gruppen und/oder weitere Elemente auf. Eine besonders bevorzugte funktionelle Gruppe ist dabei die Hydroxygruppe. Bei dem Silan kann es sich chemisch um eine einzige Substanz oder aber um ein Substanzgemisch unterschiedlicher Silane handeln, die sich insbesondere in dem Aufbau des Silicium-Grundgerüsts und/oder in der Kettenlänge unterscheiden. Im Falle eines Gemisches verschiedener Silane als Härter kann eine Mischung der vorgenannten Silane vorliegen oder alle in dem Gemisch enthaltenen Silane sind einer dieser Gruppen zuzuordnen. Zudem kann das Silan als eine weitere Komponente Kieselsäure enthalten.

Generell ist bevorzugt, dass der Härter zusätzlich zu anderen Molekülen oder alternativ ein Derivat eines zyklischen Anhydrids und/oder eine heterozyklische Verbindung mit wenigstens zwei Carboxylgruppen und/oder ein heterozyklisches Säureanhydrid und bevorzugt Bernsteinsäureanhydrid ist. Bevorzugt basiert der Härter auf einer heterozyklischen Verbindung, die besonders bevorzugt einen 5- Ring oder 6-Ring aufweist. Weiterhin bevorzugt weist der heterozyklische Ring neben Kohlenstoff lediglich Sauerstoff und besonders bevorzugt genau ein Sauerstoffatom auf. Ebenfalls bevorzugt ist der Härter ein Säureanhydrid, insbesondere ein heterozyklisches Anhydrid einer organischen Säure bzw. ein heterozyklisches Carbonsäureanhydrid, wie beispielsweise Bernsteinsäureanhydrid oder Maleinsäureanhydrid. Insbesondere bevorzugt ist Oxo-lan-2,5-dion, das auch als Bernsteinsäureanhydrid bezeichnet wird.

Generell können die Komponenten des Bindemittels auf Ligninbasis in einem breiten Spektrum von Mischungsverhältnissen der einzelnen Komponenten, insbesondere der des Lignins, des Aldehyds und dann auch des Härters eingesetzt werden. Es ist jedoch bevorzugt, dass der Anteil des Härters, als Reinsubstanz oder in wässriger Lösung, bezogen auf das Gewicht die übrigen Bestandteile des Bindemittels, insbesondere bezogen auf das Gewicht des Lignins und insbesondere des Reaktionsproduktes aus Lignin, Aldehyd und Kondensationshilfsmittels, zwischen 1 Gew.-% und 25 Gew.-%, bevorzugt zwischen 2 Gew.-% und 20 Gew.-%, besonders bevorzugt zwischen 2 Gew.-% und 15 Gew.-% und ganz besonders bevorzugt zwischen 5 Gew.-% und 10 Gew.-% beträgt. Dabei kann der Härter sowohl als Reinsubstanz eingesetzt werden, sodass sich der angegebene Massenanteil unmittelbar auf die Masse des Härters bezieht, als auch als Lösung, insbesondere als wässrige Lösung, sodass sich der angegebene Massenanteil dann auf die Masse des gelösten Härters einschließlich der Masse des Lösemittels bezieht. Wird der Härter nicht als Reinsubstanz, sondern als Lösung, insbesondere als wässrige Lösung eingesetzt, so beträgt der Gewichtsanteil des oder der enthaltenen Härter, beispielsweise eines oder mehrerer Silane und/oder Resorcin und/oder eines oder mehrerer heterozyklischer Säureanhydride, insbesondere Bernsteinsäureanhydrid, bevorzugt zwischen 10 Gew.-% und 75 Gew.-%, besonders bevorzugt zwischen 25 Gew.-% und 60 Gew.-% und ganz besonders bevorzugt zwischen 30 Gew.-% und 50 Gew.-%. Insbesondere bevorzugt beträgt der Gewichtsanteil für Silan und Resorcin jeweils in etwa 50 Gew.-% und für Bernsteinsäureanhydrid in etwa 30 Gew.-%. Entsprechend beträgt der Anteil des Härters in wässriger Lösung bezogen auf das Gewicht der übrigen Bestandteile des Bindemittels, insbesondere bezogen auf das Gewicht des Lignins und insbesondere des Lignins sowie des Aldehyds, bevorzugt zwischen 1 Gew.-% und 15 Gew.-%, besonders bevorzugt zwischen 1,5 Gew.-% und 10 Gew.-% und ganz besonders bevorzugt zwischen 2 Gew.-% und 7,5 Gew.-%. Ebenfalls bevorzugt wird die Menge bzw. der Gewichtsanteil des Härters im Bindemittel derart gewählt, dass eine Gelierzeit zwischen 2 Minuten und 45 Minuten, besonders bevorzugt zwischen 3 Minuten und 30 Minuten und ganz besonders bevorzugt zwischen 3 Minuten und 20 Minuten erreicht wird.

Weiterhin ist bevorzugt, dass der Gewichtsanteil des Lignins in dem Bindemittel zwischen 25 Gew.-% und 75 Gew.-%, bevorzugt zwischen 35 Gew.-% und 65 Gew.-%, besonders bevorzugt zwischen 40 Gew.-% und 60 Gew.-% und ganz besonders bevorzugt zwischen 40 Gew.-% und 50 Gew.-% beträgt.

Zudem sieht eine bevorzugte Ausgestaltung des erfindungsgemäßen Bindemittels vor, dass das molare Verhältnis zwischen dem Lignin und dem Aldehyd zwischen 1:1,5 und 1:10, bevorzugt zwischen 1:1,5 und 1:6, besonders bevorzugt zwischen 1:1,5 und 1:5 und ganz besonders bevorzugt zwischen 1:1,5 und 1:4 beträgt. Beim Einsatz von Glyoxal als Aldehyd beträgt das molare Verhältnis zwischen dem Lignin und dem Glyoxal bevorzugt zwischen 1:1 und 1:10, besonders bevorzugt zwischen 1:2 und 1:6 und ganz besonders bevorzugt zwischen 1:3 und 1:5. Insbesondere bevorzugt beträgt das molare Verhältnis zwischen dem Lignin und dem Glyoxal 1:4. Beim Einsatz von Propionaldehyd als Aldehyd beträgt das molare Verhältnis zwischen dem Lignin und dem Propionaldehyd bevorzugt zwischen 1:1,5 und 1:3, besonders bevorzugt zwischen 1:1,5 und 1:2 und ganz besonders bevorzugt zwischen 1:2 und 1:3. Insbesondere bevorzugt beträgt das molare Verhältnis zwischen dem Lignin und dem Propionaldehyd 1:1

Die Zugabe des Aldehyds zu dem Lignin sowie die Zugabe des Kondensationshilfsmittels ermöglicht eine Kondensationsreaktion zum erfindungsgemäßen Reaktionsprodukt. Entsprechend ist bei einer vorteilhaften Weiterbildung des erfindungsgemäßen Verfahrens zum Herstellen eines Bindemittels vorgesehen, dass das Kondensieren bei erhöhter Temperatur in stark alkalischer Lösung, insbesondere zwischen pH 11 und 13, erfolgt, wozu der pH-Wert der Lösung, insbesondere nach dem Suspendieren des Ligninpulvers und/oder vor der Zugabe des Aldehyds, eingestellt wird und bevorzugt nach der Zugabe des Aldehyds während des Erhitzens noch einmal oder mehrmals nachgestellt wird. Das Einstellen des pH erfolgt dabei bevorzugt durch Zugabe des Kondensationshilfsmittels, insbesondere in Form einer Base, besonders bevorzugt eines Hydroxids und ganz besonders in Form von Natriumhydroxid in einer wässrigen Lösung. Das erneute Einstellen des pH-Wertes und generell bevorzugt jedes Nacheinstellen erfolgt bevorzugt ebenfalls mittels der gleichen alkalischen Lösung. Der pH-Wert der stark alkalischen Lösung beträgt bevorzugt zwischen 10 und 14, besonders bevorzugt zwischen 11 und 13 und ganz besonders bevorzugt in etwa 12. Generell ist das Kondensationshilfsmittel bevorzugt ein Alkalimetallhydroxid und besonders bevorzugt Natriumhydroxid und insbesondere bevorzugt eine wässrige Lösung davon.

Mehrere Ausführungsbeispiele eines Bindemittels auf Ligninbasis, verschiedener mittels eines solchen Bindemittels hergestellter Holzwerkstoffe sowie verschiedener Anwendungsversuche des Bindemittels werden nachfolgend näher beschrieben.

### Ausführungsbeispiel 1 (Kondensation mit Glyoxal)

In einem Becherglas werden 1 Mol Ligninpulver (2500 g) mit 2200 ml Wasser versetzt und miteinander verrührt. Während des Verrührens werden 5,2 Mol Natriumhydroxid (Molgewicht NaOH; 40 g/mol; w=50 %; Zugabe: 416 g) hinzugegeben und der pH-Wert auf 12 eingestellt. Die Suspension wird nach vollständigem Verrühren in eine 3-Halsrundkolbenapparatur überführt und unter Rühren vorsichtig mit 4 Mol Glyoxal (Molgewicht Oxalaldehyd: 58 g/mol; Zugabe: 232,16 g) versetzt und auf 90 °C erhitzt. Beim Aufheizen wird der pH-Wert ständig kontrolliert und falls nötig durch Nachdosieren von Natriumhydroxid (50 %ig) auf einem pH-Wert von 12 gehalten. Die Temperatur wird bei 90 °C gehalten und für 2 h kondensiert. Nach Ablauf der 2 h, wird das Bindemittel mit einem Feststoffgehalt von etwa 45 % aus der Apparatur entnommen und rasch auf Raumtemperatur heruntergekühlt. Diese erste Komponente des Bindemittels ist nun zur Zugabe eines Härters unmittelbar vor der Anwendung des Bindemittels bereit. Eine Ermittlung des Feststoffgehalts (24 h bei 110 °C) ergab 44 Gew.-%.

### Ausführungsbeispiel 2 (Kondensation mit Propionaldehyd)

In einem Becherglas werden 1 Mol Ligninpulver (2500 g) mit 2200 ml Wasser versetzt und miteinander verrührt. Während des Verrührens werden 5,2 Mol Natriumhydroxid (Molgewicht NaOH; 40 g/mol; w=50 %; Zugabe: 416 g) hinzugegeben und der pH-Wert auf 12 eingestellt. Die Suspension wird nach vollständigem Verrühren in eine 3-Halsrundkolbenapparatur überführt und unter Rühren vorsichtig mit 1 Mol Propionaldehyd (Molgewicht Propanal: 58,08 g/mol; Zugabe 58,08 g) versetzt und auf 90 °C erhitzt. Die Temperatur wird bei 90 °C gehalten und für 2 h kondensiert. Nach Ablauf der 2 h wird diese erste Komponente des Bindemittels mit einem Feststoffgehalt von etwa 50 % aus der Apparatur entnommen und rasch auf Raumtemperatur heruntergekühlt. Diese erste Komponente des Bindemittels ist nun zur Zugabe eines Härters unmittelbar vor der Anwendung des Bindemittels bereit.

### Ausführungsbeispiel 3 (Gelierzeitmessung/Tropfversuch)

Die erste Komponente des Ligninbindemittels (Feststoffgehalt: 50 Gew.-%) wird mit 0 %, 10 % (flüssig) und 15 % (flüssig) der folgenden Härter versetzt:

| | |
|---|---|
| - Resorcin | (50 Gew.-%ige Lösung) |
| - Silan LV- L50 | (50 Gew.-%ige Lösung) |
| - Silan LV-A36 | (50 Gew.-%ige Lösung) |
| - Bernsteinsäureanhydrid | (Suspension ca. 30 Gew.-%; BSA) |
| - Silan KL-3 | (50 Gew.-%ige Lösung) |
| - Silan KL-4 | (50 Gew.-%ige Lösung) |
| - Silan KL-5 | (50 Gew.-%ige Lösung) |

Dazu werden je 10 g des jeweiligen Ligninbindemittels enthaltend jeweils einen der Härter in ein Reagenzglas eingewogen und in ein Becherglas (600 ml) mit 400 ml siedendem Wasser eingetaucht. Das Reagenzglas wird vertikal ausgerichtet und mittels Stativklammern befestigt. Mittels eines Glasstabs wird ein Tropfversuch durchgeführt. Der Glasstab wird in das Reagenzglas eingetaucht, kurz verrührt und anschließend über den Füllspiegel des Reagenzglases gehalten und der Tropfenfall beobachtet.

Geliert der Tropfen am Glasstab (während des Abkühlens) gilt der Test als beendet.

### Gelierzeiten in min:

| Bindemittel | Menge Härter in % fl. | Resorcin | Silan LV-L50 | Silan LV-A36 | BSA | Silan KL3 | Silan KL4 | Silan KL5 |
|---|---|---|---|---|---|---|---|---|
| | | 50 Gew% | 50 Gew% | 50 Gew% | 30Gew% | 50Gew% | 50Gew% | 50Gew% |
| Lignin/ Glyoxal | 0 | >30 | >30 | >30 | >30 | >30 | >30 | >30 |
| | 5 | 12:07 | 6:49 | 5:29 | 12:04 | 18:23 | 21:03* | 20:58 |
| | 10 | 8:59 | 4:41 | 4:09 | 9:42 | 16:55 | 17:16* | 18:11 |
| | 15 | 6:23 | 3:39 | 3:12 | 2:49** | 14:59 | 13:21* | 17:03 |
| Lignin/ Propionaldehyd | 0 | >30 | | | | | | |
| | 5 | 9;32 | | | | | | |
| | 10 | 7:16 | | | | | | |
| | 15 | 5:56 | | | | | | |

| | | | | | | | | |
|---|---|---|---|---|---|---|---|---|
| *) Komplette Erstarrung nach Abkühlung **) Geliert kurz nach dem Erwärmen | | | | | | | | |

### Ausführungsbeispiel 4 (Flächige Verklebung)

Eine geschliffene 8 mm HDF-Platte (hochdichte Faserplatte) wurde jeweils mit 300 g/m² flüssig (Feststoff: 44 Gew.-%) der ersten Komponente des Ligninbindemittels aus den Ausführungsbeispielen 1 und 2 bestrichen. Eine zweite HDF-Platte wird jeweils auf die bestrichene Fläche gelegt und beide HDF-Platten mit einer Schraubzwinge fest aneinandergepresst. Zur besseren Kräfteverteilung wird auf die Ober- und Unterseite jeweils eine Metallplatte aufgelegt. Dieser Aufbau wird bei 105 °C in einen Trockenschrank gelegt und nach 1 h entnommen. Nach der Entnahme wurden die Probenstücke abkühlen gelassen und die Schraubzwingen entspannt. Anschließend wurde mit einem Stechbeitel versucht, die verklebten Platten voneinander zu lösen.

Durch die Festigkeit der Klebeverbindung kam es vor dem Trennen mit dem Stechbeitel bei der ersten Komponente des Ligninbindemittels mit Glyoxal zuerst zu Ausbrüchen am Rand der Probenstücke. Als die Probenstücke komplett voneinander getrennt waren, konnten leichte Faserausrisse (Kohäsionsbruch) auf den beleimten Flächen erkannt werden. Das Verklebungsergebnis der ersten Komponente des Ligninbindemittels mit Glyoxal ist somit nicht befriedigend. Die Probe mit Propionaldehyd ließ sich ohne Kraftaufwand und ohne Faserausrisse trennen. Die Klebefuge war nur sehr schwach ausgebildet. Als Ergebnis kann zusammengefasst werden, dass die erste Komponente des Ligninbindemittels mit lediglich einem Aldehyd und ohne Härter zu keinem hinreichenden Klebeergebnis führt.

### Ausführungsbeispiel 5 (Verklebung mit Härter)

Weitere Versuche wurden mit der ersten Komponente des Ligninbindemittels mit Glyoxal gemäß dem Ausführungsbeispiel 1 durchgeführt. Mehrere geschliffene HDF-Platten wurden mit 300 g/m² Ligninbindemittels bestrichen, dem jeweils einer der folgenden Härter als Lösung zugegeben worden war:

| | | |
|---|---|---|
| Resorcin | 5 Gew% fl. | 10 Gew% fl. |
| Silan LV-L50 | 5 Gew% fl. | 10 Gew% fl. |
| Silan LV-A36 | 5 Gew% fl. | 10 Gew% fl. |
| Bersteinsäureanhydrid | 5 Gew% fl. | 10 Gew% fl. |
| Silan KL-3 | 5 Gew% fl. | 10 Gew% fl. |
| Silan KL-4 | 5 Gew% fl. | 10 Gew% fl. |
| Silan KL-5 | 5 Gew% fl. | 10 Gew% fl. |

Alle Härter außer der Bernsteinsäureanhydrid (30 Gew.-%ige Suspension bzw. Aufschlämmung) hatten einen Feststoffgehalt von 50 Gew.-%. Eine zweite HDF-Platte wurde auf die bestrichene Fläche gelegt und beide Platten mit einer Schraubzwinge fest aneinandergepresst. Zur besseren Kräfteverteilung wird jeweils auf die Ober- und Unterseite eine Metallplatte aufgelegt. Dieser Aufbau wird bei 105 °C in einen Trockenschrank gelegt und nach 1 h entnommen. Nach der Entnahme wurden die Probenstücke abkühlen gelassen und die Schraubzwingen entspannt. Anschließend wurde mit einem Stechbeitel versucht, die verklebten Platten voneinander zu lösen.

Während eine Probe ohne Härter (siehe Ausführungsbeispiel 4) ohne nennenswerten Kraftaufwand getrennt werden konnte und ein signifikanter Faserausriss nicht zu beobachten war, zeigte die Probe mit Resorcin als Härter einen sichtbaren, umfangreichen Faserausriss (ca. 30 %). Zum Trennen war ein deutlich erhöhter Kraftaufwand nötig. Die Probe mit dem Bersteinsäureanhydrid (BSA), die bei der Gelierzeitbestimmung die besten Ergebnisse geliefert hatte, zeigte geringe Faserausrisse und lies sich leichter, aber noch immer mit einem deutlichen, erforderlichen Kraftaufwand trennen. Die Proben mit den Silanen als Härter zeigten beim Trennen den umfangreichsten Faserausriss (60 %). Es war auch der höchste Kraftaufwand nötig. Durch die erhöhte Festigkeit der Klebeverbindung kam es bei allen Proben und in besonderem Umfang bei den Proben mit einem Silan als Härter vor dem Trennen mit dem Stechbeitel erst zu erheblichen Ausbrüchen am Rand der Probenstücke, was eine hinreichende Festigkeit der Verklebung zeigt.

Zusätzlich wurde auch die Querzugfestigkeit von der Klebefuge bestimmt. Eine Nullprobe wurde ebenfalls geprüft:

| | Querzugfestigkeit (N/mm²) | Querzugfestigkeit (N/mm²) | Querzugfestigkeit (N/mm²) |
|---|---|---|---|
| | | 5 Gew.-% | 10 Gew.-% |
| ohne Härter | 0,22 | | |
| Resorcin | | 0,3 | 0,31 |
| Silan LV-L50 | | 0,31 | 0,38 |
| Silan LV-A36 | | 0,36 | 0,45 |
| BSA | | 0,21 | 0,29 |
| Silan KL-3 | | 0,45 | 0,62 |
| Silan KL-4 | | 0,59 | 0,53 |
| Silan KL-5 | | 0,39 | 0,46 |

Die Ergebnisse der Querzugfestigkeit bestätigen im Wesentlichen die Ergebnisse quantitativ, die mit dem Stechbeitel qualitativ erhalten worden waren.

### Ausführungsbeispiel 6 (Herstellung von Spanplatten)

Mit einem Ligninbindemittel auf Basis von Lignin und Glyoxal wurden Einschichtspanplatten (Mittelschichtspäne) als Laborspanplatten hergestellt. Es wurden dabei die bereits erprobten Härter verwendet. Dazu wurden in einem gängigen Verfahren 8 kg Späne mit 3,6 kg des Ligninbindemittels (44 Gew.-% FS (Feststoff), entspricht 20 Gew.-% auf Holz) vermischt.

Es wurden verschiedene Härter mit zwei unterschiedlichen Konzentrationen (jeweils 25 Gew.-% FS (Feuchtsubstanz), 5 und 10 Gew.-% auf Bindemittel fl./fl.) erprobt.

Die Pressparameter zum Herstellen der Spanplatte waren wie folgt:

| | |
|---|---|
| - Temperatur: | 210 °C |
| - Presszeit: | 30/400/0,1 s |
| - Pressdruck: | 1,5/1,8/0,3 kg/cm² |

Es wurden pro Platte 1,04 kg beleimte Späne eingewogen. Daraus wurden Platten im Format 300 x 300 x 15 mm hergestellt. Von den Platten wurden ausgewählte Plattenparameter bestimmt:

| Nr. | Bindemittel Gew.-% | Einwaage Kg | Härter % (fl/fl) | Stärke | Querzug (N/mm²) |
|---|---|---|---|---|---|
| 1 | 20 | 1,04 | Resorcin 5% | -*) | - |
| 2 | 20 | 1,04 | Resorcin 10% | -*) | - |
| 3 | 20 | 1,04 | LV-A36 5% | 15,3 | 0,3 |
| 4 | 20 | 1,04 | LV-A36 10% | 15,0 | 0,28 |
| 5 | 20 | 1,04 | LV-L50 5% | -*) | - |
| 6 | 20 | 1,04 | LV-L50 10% | 14,7 | 0,23 |
| 7 | 20 | 1,04 | BSA 5% | 15,2 | 0,25 |
| 8 | 20 | 1,04 | BSA 10% | 15,0 | 0,26 |
| 9 | 20 | 1,04 | KL3 5% | 15,1 | 0,39 |
| 10 | 20 | 1,04 | KL3 10% | 14,7 | 0,51 |
| 11 | 20 | 1,04 | KL4 5% | 15,2 | 0,36 |
| 12 | 20 | 1,04 | KL4 10% | 14,8 | 0,41 |
| 13 | 20 | 1,04 | KL5 5% | 15,1 | 0,41 |
| 14 | 20 | 1,04 | KL5 10% | 14,9 | 0,46 |

| | | | | | |
|---|---|---|---|---|---|
| *Spalter | | | | | |

### Ausführungsbeispiel 7 (Herstellung von Faserplatten)

An einer kontinuierlichen Heißpresse zur Herstellung von Faserplatten wurden HDF-Platten (hochdichte Faserplatte) in einer Stärke von 10 mm mit einer Rohdichte von 850 kg/m³ hergestellt. Dazu wurden im Refiner hergestellte Fasern mit Ligninleim aus dem Ausführungsbeispiel 1 beleimt. Das Ligninbindemittel enthielt den Härter Silan KL-5 (5 Gew.₋% Härter fl. auf Bindemittel fl.). Die Bindemittelmenge auf Fasern atro betrug 15 Gew.-% fest. Das Bindemittel hatte einen Feststoffgehalt von ca. 50 Gew.-%. Die Fasern wurden in der Blow-Line mit dem mit Härter versetzten Ligninbindemittel und mit 2 Gew.-% Paraffin (Heißparaffin) in Kontakt gebracht.

Nach dem Trocknen der Fasern wurden diese gestreut und dann in der kontinuierlichen Heißpresse zu einer HDF-Platte gepresst. Die Temperatur in der Presse lag in der ersten Hälfte der Heißpresse bei ca. 200 °C am Band und in der zweiten Hälfte der Heißpresse bei ca. 170 °C am Band. Der Vorschub an der Heißpresse lag bei 488 mm/s (Heißpressenparameter: Länge: 38 m, Breite: 2,07 m). Die erhaltene HDF-Platte wurde aufgetrennt (Format: 280 x 2,07 m) und abgekühlt. Die Platten sind homogen schwarz.

Eine Prüfung der Plattenparameter ergab:
- Dichte: 830 kg/m³
- Querzug: 1,5 N/mm²
- Quellung (24 h): 18 %
- Formaldehydbestimmung (Gasanalysemethode): 0,3 mg/h m²

## Patentansprüche

1. Bindemittel auf Ligninbasis zum Herstellen von Holzwerkstoffen aus Holzzerkleinerungsprodukten, aus:
- einem Reaktionsprodukt aus
- Lignin,
- einem wenigstens zwei Kohlenstoffatome aufweisenden Aldehyd, sowie
- einem Kondensationshilfsmittel, und
- einen Härter zum Einstellen der Reaktivität des Reaktionsproduktes, insbesondere zum Zusetzen unmittelbar vor der Verwendung des Bindemittels, wobei
- das Bindemittel frei von Formaldehyd ist.

2. Bindemittel nach Anspruch 1, **dadurch gekennzeichnet, dass** der Aldehyd bifunktionelles Aldehyd oder ein Monoaldehyd mit mindestens 3 Kohlenstoffatomen ist.

3. Bindemittel nach Anspruch 1 oder 2, **dadurch gekennzeichnet, dass** das Aldehyd Glyoxal und/oder Propanal ist.

4. Bindemittel nach wenigstens einem der vorhergehenden Ansprüche, **dadurch gekennzeichnet, dass** das Lignin als Ligninpulver und/oder suspendiert in Wasser eingesetzt wird.

5. Bindemittel nach wenigstens einem der vorhergehenden Ansprüche, **dadurch gekennzeichnet, dass** der Härter eine oder mehrere Substanzen aus der Gruppe Resorcin, ein Silan und/oder Bernsteinsäureanhydrid ist.

6. Bindemittel nach wenigstens einem der vorhergehenden Ansprüche, **dadurch gekennzeichnet, dass** das Reaktionsprodukt, insbesondere bei der Zugabe des Härters, in flüssiger Form vorliegt.

7. Bindemittel nach wenigstens einem der vorhergehenden Ansprüche, **dadurch gekennzeichnet, dass** das Kondensationshilfsmittel eine wässrige Natriumhydroxidlösung ist.

8. Bindemittel nach wenigstens einem der vorhergehenden Ansprüche, **dadurch gekennzeichnet, dass** der Anteil des Härters bezogen auf das Gewicht die übrigen Bestandteile des Bindemittels zwischen 5 Gew.-% und 10 Gew.-% beträgt.

9. Bindemittel nach wenigstens einem der vorhergehenden Ansprüche, **dadurch gekennzeichnet, dass** der Gewichtsanteil des Lignins in dem Bindemittel zwischen 40 Gew.-% und 60 Gew.-% beträgt.

10. Bindemittel nach wenigstens einem der vorhergehenden Ansprüche, **dadurch gekennzeichnet, dass** das molare Verhältnis zwischen dem Lignin und dem Aldehyd zwischen 1:1,5 und 1:5 beträgt.

11. Holzwerkstoff, insbesondere Holzwerkstoffplatte, Spanplatte oder Faserplatte, aufweisend
- wenigstens ein Holzzerkleinerungsprodukt und insbesondere ein Faser- und/oder Spanmaterial aus Holz, und
- ein Bindemittel auf Ligninbasis, insbesondere nach einem der vorhergehenden Ansprüche 1 - 10.

12. Verfahren zum Herstellen einer Spanplatte, mit den Schritten:
- Bereitstellen eines Spanmaterials,
- Beleimen des Spanmaterials mit einem Bindemittel auf Ligninbasis gemäß wenigstens einem der Ansprüche 1 - 10,
- ein- oder mehrschichtiges Aufstreuen des Spanmaterials zum Erzeugen eines Formstrangs,
- Pressen und Erhitzen des Formstrangs zum Aushärten des Bindemittels und somit zum Erzeugen einer Spanplatte.

13. Verfahren zum Herstellen einer Faserplatte, insbesondere einer hochdichten Faserplatte, mit den Schritten:
- Bereitstellen eines Fasermaterials,
- Beleimen des Fasermaterials mit einem Bindemittel auf Ligninbasis gemäß wenigstens einem der Ansprüche 1 - 10,
- Trocknung des beleimten Fasermaterials,
- ein- oder mehrschichtiges Aufstreuen des Fasermaterials zum Erzeugen eines Formstrangs,
- Pressen und Erhitzen des Formstrangs zum Aushärten des Bindemittels und somit zum Erzeugen einer Faserplatte.

14. Verfahren zum Herstellen eines Bindemittels auf Ligninbasis, insbesondere nach einem der vorhergehenden Ansprüche 1 - 10, mit den Schritten:
- Zugabe von Lignin und bevorzugt eines in einer wässrigen Lösung suspendierten Ligninpulvers,
- Zugabe eines wenigstens zwei Kohlenstoffatome aufweisenden Aldehyds, insbesondere Glyoxal,
- Zugabe eines Kondensationshilfsmittels,
- Erhitzen und Halten auf einer erhöhten Temperatur zum Kondensieren,
- Abkühlen des erhaltenen Gemisches, und
- Zusetzen eines Härters unmittelbar vor der Verwendung des Bindemittels.

15. Verfahren zum Herstellen eines Bindemittels nach Anspruch 14, **dadurch gekennzeichnet, dass** das Kondensieren bei erhöhter Temperatur in stark alkalischer Lösung, insbesondere zwischen pH 11 und 13, erfolgt, wozu der pH-Wert der Lösung nach dem Suspendieren des Ligninpulvers und/oder vor der Zugabe des Aldehyds mittels des Kondensationshilfsmittels eingestellt wird und bevorzugt nach der Zugabe des Aldehyds und/oder während des Erhitzens noch einmal mittels des Kondensationshilfsmittels eingestellt wird.

## Geänderte Patentansprüche

### Geänderte Patentansprüche gemäss Regel 137(2) EPÜ.

1. Bindemittel auf Ligninbasis zum Herstellen von Holzwerkstoffen aus Holzzerkleinerungsprodukten, wenigstens zu 95 Gew.-% gebildet aus:
- einem Reaktionsprodukt aus
- Lignin,
- einem wenigstens zwei Kohlenstoffatome aufweisenden Aldehyd, sowie
- einem Kondensationshilfsmittel, und
- einen Härter zum Einstellen der Reaktivität des Reaktionsproduktes sowie zum Zusetzen unmittelbar vor der Verwendung des Bindemittels, wobei
- das Bindemittel frei von Formaldehyd ist.

2. Bindemittel nach Anspruch 1, **dadurch gekennzeichnet, dass** der Aldehyd bifunktionelles Aldehyd oder ein Monoaldehyd mit mindestens 3 Kohlenstoffatomen ist.

3. Bindemittel nach Anspruch 1 oder 2, **dadurch gekennzeichnet, dass** das Aldehyd Glyoxal und/oder Propanal ist.

4. Bindemittel nach wenigstens einem der vorhergehenden Ansprüche, **dadurch gekennzeichnet, dass** das Lignin als Ligninpulver und/oder suspendiert in Wasser eingesetzt wird.

5. Bindemittel nach wenigstens einem der vorhergehenden Ansprüche, **dadurch gekennzeichnet, dass** der Härter eine oder mehrere Substanzen aus der Gruppe Resorcin, ein Silan und/oder Bernsteinsäureanhydrid ist.

6. Bindemittel nach wenigstens einem der vorhergehenden Ansprüche, **dadurch gekennzeichnet, dass** das Reaktionsprodukt, insbesondere bei der Zugabe des Härters, in flüssiger Form vorliegt.

7. Bindemittel nach wenigstens einem der vorhergehenden Ansprüche, **dadurch gekennzeichnet, dass** das Kondensationshilfsmittel eine wässrige Natriumhydroxidlösung ist.

8. Bindemittel nach wenigstens einem der vorhergehenden Ansprüche, **dadurch gekennzeichnet, dass** der Anteil des Härters bezogen auf das Gewicht die übrigen Bestandteile des Bindemittels zwischen 5 Gew.-% und 10 Gew.-% beträgt.

9. Bindemittel nach wenigstens einem der vorhergehenden Ansprüche, **dadurch gekennzeichnet, dass** der Gewichtsanteil des Lignins in dem Bindemittel zwischen 40 Gew.-% und 60 Gew.-% beträgt.

10. Bindemittel nach wenigstens einem der vorhergehenden Ansprüche, **dadurch gekennzeichnet, dass** das molare Verhältnis zwischen dem Lignin und dem Aldehyd zwischen 1:1,5 und 1:5 beträgt.

11. Holzwerkstoff, insbesondere Holzwerkstoffplatte, Spanplatte oder Faserplatte, aufweisend
- wenigstens ein Holzzerkleinerungsprodukt und insbesondere ein Faser- und/oder Spanmaterial aus Holz, und
- ein Bindemittel auf Ligninbasis nach einem der vorhergehenden Ansprüche 1 - 10.

12. Verfahren zum Herstellen einer Spanplatte, mit den Schritten:
- Bereitstellen eines Spanmaterials,
- Beleimen des Spanmaterials mit einem Bindemittel auf Ligninbasis gemäß wenigstens einem der Ansprüche 1 - 10,
- ein- oder mehrschichtiges Aufstreuen des Spanmaterials zum Erzeugen eines Formstrangs,
- Pressen und Erhitzen des Formstrangs zum Aushärten des Bindemittels und somit zum Erzeugen einer Spanplatte.

13. Verfahren zum Herstellen einer Faserplatte, insbesondere einer hochdichten Faserplatte, mit den Schritten:
- Bereitstellen eines Fasermaterials,
- Beleimen des Fasermaterials mit einem Bindemittel auf Ligninbasis gemäß wenigstens einem der Ansprüche 1 - 10,
- Trocknung des beleimten Fasermaterials,
- ein- oder mehrschichtiges Aufstreuen des Fasermaterials zum Erzeugen eines Formstrangs,
- Pressen und Erhitzen des Formstrangs zum Aushärten des Bindemittels und somit zum Erzeugen einer Faserplatte.

14. Verfahren zum Herstellen eines Bindemittels auf Ligninbasis, insbesondere nach einem der vorhergehenden Ansprüche 1 - 10, mit den Schritten:
- Zugabe von Lignin und bevorzugt eines in einer wässrigen Lösung suspendierten Ligninpulvers,
- Zugabe eines wenigstens zwei Kohlenstoffatome aufweisenden Aldehyds, insbesondere Glyoxal,
- Zugabe eines Kondensationshilfsmittels,
- Erhitzen und Halten auf einer erhöhten Temperatur zum Kondensieren und zum Erhalt eines Ligninbindemittels,
- Abkühlen des erhaltenen Gemisches, und
- Zusetzen eines Härters unmittelbar vor der Verwendung des Bindemittels, wobei
- der Anteil des Ligninbindemittels am Bindemittel mindestens 80 Gew.-% beträgt.

15. Verfahren zum Herstellen eines Bindemittels nach Anspruch 14, **dadurch gekennzeichnet, dass** das Kondensieren bei erhöhter Temperatur in stark alkalischer Lösung, insbesondere zwischen pH 11 und 13, erfolgt, wozu der pH-Wert der Lösung nach dem Suspendieren des Ligninpulvers und/oder vor der Zugabe des Aldehyds mittels des Kondensationshilfsmittels eingestellt wird und bevorzugt nach der Zugabe des Aldehyds und/oder während des Erhitzens noch einmal mittels des Kondensationshilfsmittels eingestellt wird.
